# EUROPÄISCHE PATENTANMELDUNG

(11) **EP 0 953 845 A1**
(43) Veröffentlichungstag der Anmeldung: **03.11.1999**
(21) Anmeldenummer: 98107370.3
(22) Anmeldetag: 23.04.1998
(51) Int. Cl.: G01R 11/00, H02J 13/00

(54) **Verfahren zur Anwahl einer Unterstelle durch eine Zentrale in einem Übertragungssystem**

(71) Anmelder: Electrowatt Technology Innovation AG, 6301 Zug (CH)
(72) Erfinder: Moos, Erich, 6300 Zug (CH); Hess, Peter, 6331 Hünenberg (CH)

(57) **Zusammenfassung**

Das Verfahren dient zur Anwahl einer Unterstelle (USₘ) durch eine Zentrale (Z) in einem Übertragungssystem zwecks Informationsübertragung über einen aus einer Vielzahl von Kommunikationskanälen angewählten Kommunikationskanal (m). Die Vielzahl der Kommunikationskanäle ist in Kommunikationsgruppen (GRI, GRII, GRIII) gleicher Eigenschaft oder gleicher Parameterwerte unterteilt. Innerhalb einer ausgewählten Kommunikationsgruppe (GRII) wird ein Kommunikationskanal (m) angewählt, der noch kommunikationsfrei ist. Falls alle (n) Kommunikationskanäle der Kommunikationsgruppe (GRII) bereits belegt sind, geht die Zentrale (Z) in Warteposition, bis dass mindestens einer der Kommunikationskanäle der Kommunikationsgruppe (GRII) kommunikationsfrei wird. Das Verfahren ermöglicht eine optimale, parallele und zeitgleiche Ausnutzung aller verfügbaren Kommunikationsmittel für eine Gruppe der Unterstellen, so dass die Zentrale (Z) über Kommunikationskanäle dieser Gruppe gleichzeitig und optimal Daten, insbesondere Messdaten von Elektrizitätszählern, aller zugeordneten Unterstellen erfasst.

## Beschreibung

Die Erfindung bezieht sich aufein Verfahren zur Anwahl einer Unterstelle durch eine Zentrale in einem Übertragungssystem gemäss dem Oberbegriff des Anspruchs 1.

Das Verfahren wird vorzugsweise verwendet in einem Übertragungssystem, welches einer Fernablesung von Elektrizitätszählern dient. Der Erfindung liegt die Aufgabe zugrunde, ein Verfahren der eingangs genannten Art zu

verwirklichen, welches eine optimale, parallele und zeitgleiche Ausnutzung aller verfügbaren Kommunikationsmittel für eine Gruppe von Unterstellen ermöglicht, so dass eine Zentrale über Kommunikationskanäle dieser Gruppe gleichzeitig und optimal Daten, insbesondere Messdaten von Elektrizitätszählern, aller zugeordneten Unterstellen erfasst.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen
- Fig. 1: ein schematische Darstellung eines Übertragungssystems und
- Fig. 2: ein Flussdiagramm einer Datenerfassung.

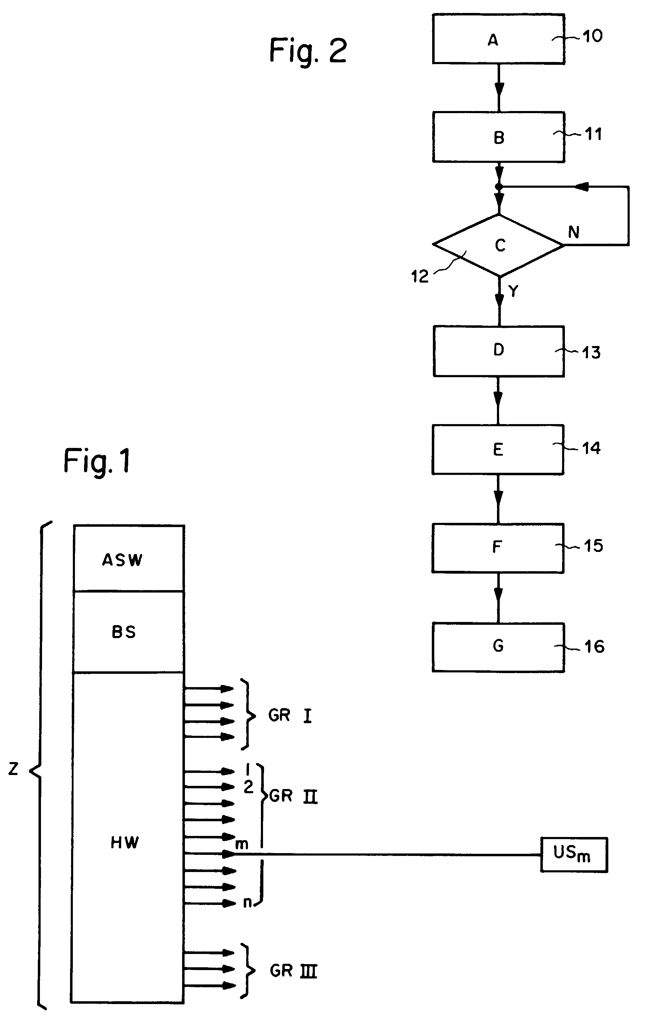

Ein in der Fig. 1 schematisch dargestelltes Übertragungssystem besteht aus einer Zentrale Z, die über eine Vielzahl von Kommunikationskanälen mit Unterstellen verbunden ist. Das Übertragungssystem dient vorzugsweise einer Fernablesung von Elektrizitätszählern, die zu den Unterstellen gehören und mit diesen verbunden sind. Die Zentrale Z muss gleichzeitig mehrere Kommunikationskanäle ansteuern können, um die Daten der Unterstellen parallel zu erfassen. Die Zentrale Z enthält eine Hardware HW, ein Betriebssystem BS und eine Applikations-Software ASW (Anwender-Software). Die Hardware HW ist über die Vielzahl von Kommunikationskanälen mit den Unterstellen verbunden. Da die einzelnen Unterstellen unterschiedliche Kommunikationsparameter wie Übertragungsart, Steuerzeichen, usw. aufweisen, werden die einzelnen Kommunikationskanäle erfindungsgemäss zu Kommunikationsgruppen zusammengefasst. Die Vielzahl der Kommunikationskanäle ist somit in Kommunikationsgruppen gleicher Eigenschaft oder gleicher Parameterwerte unterteilt. Jeder Kommunikationskanal einer Kommunikationsgruppe ist dabei so ausgewählt, dass er gleiche Kommunikationsparameter aufweist wie die anderen Kommunikationskanäle der Kommunikationsgruppe. Ein solcher Parameter ist wie bereits erwähnt die Übertragungsart, beispielsweise ein Halbduplex- oder Vollduplex-Betrieb. Die Kommunikationskanäle einer gleichen Kommunikationsgruppe haben dann eine gleiche Übertragungsart. In der Fig. 1 gilt die Annahme, dass drei Kommunikationsgruppen GRI, GRII und GRIII vorhanden sind, wobei z. B. die Kommunikationsgruppe GRI vier, die Kommunikationsgruppe GRII n und die Kommunikationsgruppe GRIII drei Kommunikationskanäle aufweist. Beim definieren einer Unterstelle wird eine Kommunikationsgruppe, welche über die für diese Unterstelle gültigen Kommunikationsparameter verfügt, dieser Unterstelle zugeordnet. Die Zentrale Z kann über die Kommunikationskanäle dieser Kommunikationsgruppe die Daten, z. B. Messdaten der Elektrizitätszähler, der betreffenden Unterstellen erfassen. Dadurch wird eine optimale, parallele und zeitgleiche Ausnutzung aller verfügbaren Kommunikationsmittel für eine Kommunikationsgruppe von Unterstellen ermöglicht. In der Fig. 1 ist aus Gründen der zeichnerischen Einfachheit nur eine einzige Unterstelle USₘ dargestellt, welche am m-ten Kommunikationskanal der Kommunikationsgruppe GRII angeschlossen ist.

Das erfindungsgemässe Verfahren zur Anwahl einer Unterstelle, z. B. USₘ, durch die Zentrale Z des Übertragungssystems zwecks Informationsübertragung über einen Kommunikationskanal, z. B. m, der aus der Vielzahl der Kommunikationskanäle angewählt wurde, beinhaltet, dass innerhalb einer ausgewählten Kommunikationsgruppe, z. B. GRII, die die erwünschten Eigenschaften oder Parameterwerte besitzt, ein Kommunikationskanal m angewählt wird, der noch kommunikationsfrei ist. Falls alle n Kommunikationskanäle der betreffenden Kommunikationsgruppe GRII bereits belegt sind, geht die Zentrale Z in Warteposition, bis dass mindestens einer der Kommunikationskanäle der betreffenden Kommunikationsgruppe GRII kommunikationsfrei wird. Jeder Kommunikationsgruppe GRI, GRII und GRIII der Kommunikationskanäle ist zu diesem Zweck vorzugsweise ein eigenes Codewort, z. B. als Adresse zugeordnet. Beim Belegen eines Kommunikationskanals mit einer Kommunikation wird eine Beleginformation in der Zentrale Z gespeichert, aus welcher die Zentrale Z erkennt, dass der betreffende Kommunikationskanal bereits belegt ist. Das Speichern der Beleginformation besteht vorzugsweise aus einem Setzen eines Flags oder einem Speichern eines Codewortes in einem Speicher der Zentrale Z. Die Beleginformation wird dabei in dem in der Zentrale Z vorhandenen Betriebssystem BS oder in der in der Zentrale Z vorhandenen Applikations-Software ASW gespeichert.

Die Erfassung der Daten der Unterstellen durch die Zentrale Z läuft gemäss dem in der Fig. 2 dargestellten Flussdiagramm ab. Dieses enthält 6 Funktionsblöcke 10 bis 11 und 13 bis 16 sowie einen Entscheidungsblock 12, die in der Reihenfolge ihrer Numerierung in Reihe geschaltet sind. Zu den Blöcken 10 bis 16 gehören in der angegebenen Reihenfolge die Funktionen A, B, C, D, E, F oder G, wobei die Funktionen folgende Bedeutung besitzen:
- A:: Start einer Datenerfassung einer bestimmten Unterstelle,
- B: lesen der Bezeichnung der zugeordneten Kommunikationsgruppe,
- C: Fragestellung, ob ein Kommunikationskanal dieser Kommunikationsgruppe frei oder nicht frei ist,
- D: Belegen eines freien Kommunikationskanals,
- E: Erfassen der Daten,
- F: Freigabe des zur Kommunikation benutzten Kommunikationskanals und
- G: Ende der Datenerfassung

Der Entscheidungsblock 12 besitzt einen mit Y ("yes") bezeichneten Ja-Ausgang und einen mit N ("no") bezeichneten Nein-Ausgang, wobei der letztere mit dem Eingang des Entscheidungsblocks 12 verbunden ist, während der erstere aufden Eingang des nächsten Funktionsblocks 13 der Reihenschaltung geführt ist.

Nach einen Start der Datenerfassung gemäss Funktionsblock 10, wird gemäss Funktionsblock 11 die zu den Unterstellen, deren Daten zu erfassen sind, gehörende Kommunikationsgruppe gewählt und anschliessend gemäss Entscheidungsblock 12 abgeklärt, ob einer der Komunikationskanäle der betreffenden Kommunikationsgruppe noch frei ist oder nicht. Im letzteren Fall geht das Programm wieder zum Eingang des Entscheidungsblocks 12 zurück und durchläuft den letzteren so oft, bis dass einer dieser Kommunikationskanäle frei ist. Wenn letzteres der Fall ist, geht das Programm zum Funktionsblock 13 und belegt den freien Kommunikationskanal mit der Datenerfassung, die gemäss Funktionsblock 14 erfolgt. Nach deren Beendigung wird der Kommunikationskanal gemäss Funktionsblock 15 wieder freigegeben, womit dann gemäss Funktionsblock 16 die Übertragung beendet ist.

## Patentansprüche

1. Verfahren zur Anwahl einer Unterstelle (USₘ) durch eine Zentrale (Z) in einem Übertragungssystem zwecks Informationsübertragung über einen aus einer Vielzahl von Kommunikationskanälen angewählten Kommunikationskanal (m), dadurch gekennzeichnet, dass die Vielzahl der Kommunikationskanäle in Kommunikationsgruppen (GRI, GRII, GRIII) gleicher Eigenschaft oder gleicher Parameterwerte unterteilt ist und dass innerhalb einer ausgewählten Kommunikationsgruppe (GRII) ein Kommunikationskanal (m) angewählt wird, der noch kommunikationsfrei ist, oder, falls alle (n) Kommunikationskanäle der Kommunikationsgruppe (GRII) bereits belegt sind, die Zentrale (Z) in Warteposition geht, bis dass mindestens einer der Kommunikationskanäle der Kommunikationsgruppe (GRII) kommunikationsfrei wird.

2. Verfahren nach Anspruch 1, dadurch gekennzeichnet, dass jeder Kommunikationsgruppe (GRI, GRII, GRIII) der Kommunikationskanäle ein eigenes Codewort zugeordnet ist.

3. Verfahren nach Anspruch 1 oder 2, dadurch gekennzeichnet, dass beim Belegen eines Kommunikationskanals mit einer Kommunikation eine Beleginformation in der Zentrale (Z) gespeichert wird, aus der die Zentrale (Z) erkennt, dass der betreffende Kommunikationskanal bereits belegt ist.

4. Verfahren nach Anspruch 3, dadurch gekennzeichnet, dass das Speichern der Beleginformation aus einem Setzen eines Flags besteht.

5. Verfahren nach Anspruch 3, dadurch gekennzeichnet, dass das Speichern der Beleginformation aus einem Speichern eines Codewortes besteht, welches in einem Speicher der Zentrale (Z) gespeichert wird.

6. Verfahren nach einem der Ansprüche 3 bis 5, dadurch gekennzeichnet, dass die Beleginformation in einem in der Zentrale (Z) vorhandenes Betriebssystem (BS) gespeichert wird.

7. Verfahren nach einem der Ansprüche 3 bis 5, dadurch gekennzeichnet, dass die Beleginformation in einer in der Zentrale (Z) vorhandenen Applikations-Software (ASW) gespeichert wird.

8. Verfahren nach einem der Ansprüche 1 bis 7, dadurch gekennzeichnet, dass das Übertragungssystem einer Fernablesung von Elektrizitätszählern dient.
